# EUROPEAN PATENT SPECIFICATION

(11) **EP 2 334 748 B1**
(45) Date of publication and mention of the grant of the patent: **05.06.2019**
(21) Application number: 09792183.7
(22) Date of filing: 02.09.2009
(51) Int. Cl.: C09J 189/00, C09J 179/02, C08G 73/02, C08L 79/02, C08L 89/00

(54) **PROTEIN/CATIONIC POLYMER COMPOSITIONS HAVING REDUCED VISCOSITY**
EINE REDUZIERTE VISKOSITÄT AUFWEISENDE ZUSAMMENSETZUNG AUS PROTEIN/KATIONISCHEM POLYMER
COMPOSITIONS DE PROTÉINE/POLYMÈRE CATIONIQUE PRÉSENTANT UNE VISCOSITÉ RÉDUITE

(30) Priority: 08.09.2008 US 191469 P
(43) Date of publication of application: 22.06.2011
(73) Proprietor: Solenis Technologies Cayman, L.P., 8200 Schaffhausen (CH)
(72) Inventor: SPRAUL, Bryan, K., Wilmington, DE 19810 (US); ALLEN, Anthony, J., Madison, Wisconsin 53719 (US)
(74) Representative: LKGLOBAL Lorenz & Kopf PartG mbB Patentanwälte
(86) International application number: PCT/US2009/055755
(87) International publication number: WO 2010/028062

(56) References cited:
- WO-A-99/61538
- US-A- 2 882 250
- US-A1- 2004 089 418
- KALAPATHY U ET AL: "Alkali-modified soy proteins: effect of salts and disulfide bond cleavage on adhesion and viscosity" JAOCS, JOURNAL OF THE AMERICAN OIL CHEMISTS' SOCIETY 1996 AUG AMERICAN OIL CHEMISTS' SOC, vol. 73, no. 8, August 1996 (1996-08), pages 1063-1066, XP002563617 cited in the application

## Description

### FIELD OF THE INVENTION

This invention relates to protein- polymer compositions having reduced viscosity and improved viscosity stability.

### BACKGROUND OF THE INVENTION

Protein-based adhesives are among the oldest adhesive materials known to man. Adhesives derived from protein-containing soy flour first came into general use during the 1920's (U.S. Patents 1,813,387, 1,724,695 and 1,994,050), Soy flour suitable for use in adhesives was, and still is, obtained by removing some or most of the oil from the soybean, yielding a residual soy meal that was subsequently ground into extremely fine soy flour. Typically, hexane is used to extract the majority of the non-polar oils from the crushed soybeans, although extrusion/extraction methods are also suitable means of oil removal. The resulting soy flour was then denatured (i.e., the secondary, tertiary and/or quaternary structures of the proteins were altered to expose additional polar functional groups capable of bonding) with an alkaline agent and, to some extent, hydrolyzed (i.e., the covalent bonds were broken) to yield adhesives for wood bonding under dry conditions. However, these early soybean adhesives exhibited poor water resistance, and their use was strictly limited to interior applications. There is a need in the industry to produce more environmentally friendly products, such as those having decreased formaldehyde emissions.

More recently, amine-epichlorohydrin polymers (AE polymers) have been used in combination with proteins as adhesives for wood products (U.S. Patents 7,060,798 and 7,252,735; U.S. Patent Applications 2008/0021187 and 2008/0050602.

One of the challenges of this adhesive system is to develop formulations with manageable viscosity. High viscosity systems are difficult to manage. They have poor pumpability and it is difficult to distribute the adhesive and can also be difficult to obtain an evenly distributed layer of adhesive on a substrate. High viscosity systems may require progressive cavity pumps which can be a large capital cost and can also require special mixing and holding tanks with stirrers designed to handle high torque. When trying to apply the adhesive using a roll coater the high viscosity can result in leading/trailing edge issues. Resolving this problem requires larger diameter rolls which may require an entirely new roll coater, or may require specially designed rolls which are expensive as well. In addition to addressing roll coating issues, a lower viscosity formulation allows the adhesive to be sprayed and/or to be used at higher solids levels. Spraying the adhesive formulation allows it to be used in applications such as particleboard (PB), oriented strand board (OSB), chip board, flake board, high density fiberboard and medium density fiberboard. Higher solids can provide improvements in bond quality and tack and can provide wood products having lower levels of moisture due to the decreased amount of water in the adhesive. Higher solids levels are also desirable in that the lower water content of these formulations reduces the tendency for "blows" as the result of steam off-gassing in the fabrication of wood composites under conditions of heat and pressure.

Additives that reduce viscosity are greatly desired. However, viscosity modifiers can be deleterious to adhesive properties. Use of inorganic salts or some enzymes can greatly reduce viscosity, but the use of both of these additives often results in degraded adhesive performance. Use of reagents that are nucleophilic, such as sulfite and thiols, can be troublesome as they may react with the AE resin preferentially which would also lead to a degradation in performance.

### BRIEF SUMMARY OF THE INVENTION

The invention is set out in accordance with the appended claims.

The present invention relates to an adhesive composition comprising a protein component, an azetidinium functionalized polymer component and a viscosity modifying component. The present invention also relates to a composite and a method of making a composite comprising a substrate and the adhesive composition of the present invention.

### DETAILED DESCRIPTION OF THE INVENTION

The present invention relates to an adhesive composition comprising a protein component, an azetidinium functionalized polymer component and a viscosity modifying component.

Surprisingly, it has been discovered that the inclusion of a viscosity modifying component selected from sulfur based reducing agents results in both significantly reduced viscosity while retaining adhesive strength, both of which provide significant commercially advantageous benefits. In addition to lowering viscosity, these formulations exhibit excellent viscosity stability with time.

One preferred embodiment of the invention provides for an azetidinium functionalized polymer/soy adhesive formulation containing sodium sulfite, sodium metabisulfite or sodium bisulfite.

The viscosity of a protein/polymer adhesive composition is proportional to the total solids level and the pH. Higher solids levels are desirable in that the lower water contest of these formulations reduces the tendency for "blows" as the result of steam off-gassing in the fabrication of wood composites under conditions of heat and pressure. Higher adhesive solids contents can also result in improved bonding due to the inclusion of more bondable solids being applied to the substrate. Lower moisture contents (higher total solids) in adhesive formulations can also allow one to reduce the temperature and cure time for fabricating wood composites, both of which provide economic savings. The final moisture content of the finish product can also be critical as per the Hardwood Plywood Veneer Association/American National Standards Institute ANSI /HPVA EF 2002 standard for plywood and engineered wood flooring (EWF). The final moisture content of a wood product is greatly controlled by the solids/amount of the adhesive applied. Higher solids adhesives can sometimes provide improved bonding and tack.

With the AE/soy formulations in the current art, it is often difficult to balance the solids content and pH with viscosity to achieve desirable processing conditions and bond properties. The present invention allows more latitude in preparing AE/soy adhesives that will meet the needs of wood composite manufacturers.

The adhesives of the present invention exhibit a degree of constancy of viscosity with time which allows for longer pot life, better control of adhesive properties and also provides much better control over the transfer and application of the adhesive composition to a desired substrate.

Protein based adhesives are well known in the art. Suitable proteins for use in the present invention include casein, blood meal, feather meal, keratin, gelatin, collagen, gluten, wheat gluten (wheat protein), whey protein, zein (corn protein), rapeseed meal, sunflower meal and soy protein. Preferably the protein is a plant based protein.

Soy is a particularly useful source of protein for the current invention. Soy can be used in the form of soy protein isolates, soy concentrates, soy flour, soy meal or toasted soy. Soy flour suitable for use in adhesives can be obtained by removing some or most of the oil from the soybean, yielding a residual soy meal that is subsequently ground into extremely fine soy flour. Typically, hexane is used to extract the majority of the non-polar oils from the crushed soybeans, although extrusion/extraction methods are also suitable means of oil removal. Residual hexane in the extracted soy flakes is typically removed by one of two processes: a desolventiser toaster (DT) process or by using a flash desolventiser system (FDS). The use of the DT process results in a more severe heat treatment of the soy (maximum temperature of about 120°C; 45-70 minutes residence time) than the FDS process (maximum temperature of about 70°C; 1-60 seconds residence time). The DT process results in a darker product, typically referred to as soy meal or toasted soy. These terms will be used interchangeably to refer to soy products processed by the DT method.

The ability of the protein portion of the soy product to be dissolved or dispersed in water is measured by the Protein Dispersibility index (PDI) test. This test has been described as follows: "For this test, a sample of soybeans is ground, mixed in a specific ratio with water, and blended at a set speed (7,500 rpm) for a specific time (10 minutes). The nitrogen content of the ground soybeans and of the extract are determined using the combustion method. The PDI value is the quotient of the nitrogen content of the extract divided by the nitrogen content of the original bean.", Illinois Crop Improvement Association Inc. website: http://www.ilcrop.com/ipglab/soybtest/soybdesc.htm, accessed 7-27-08.

The protein portion of DT-processed soy products have a lower solubility/dispersibility in water than the soy products processed by the FDS method as indicated by lower PDI values. Soy meals (toasted soy), typically have PDI values of 20 or less, whereas the FDS-processed soy products have PDI values ranging from 20 to 90,

Soy protein is commonly obtained in the form of soy flour (about 50 wt. % protein, dry basis) by grinding processed soy flakes to a 100-200 mesh. The soy flour can be further purified (usually by solvent extraction of soluble carbohydrates) to give soy protein concentrate which contains about 65 wt. % protein, dry basis. Defatted soy can be further purified to produce soy protein isolate (SPI), which has a protein content of at least about 85 wt. %, dry basis.

The protein may be pretreated or modified to improve its solubility, dispersibility and/or reactivity. The soy protein may be used as produced or may be further modified to provide performance enhancements. U.S. patent 7,060,798, the entire content of which is herein incorporated by reference, teaches methods of modifying protein and their incorporation in to an adhesive. It is contemplated that modified protein or modified soy flour can be used with the present invention.

The use of reducing agents to cleave disulfide bonds in proteins is well known and the use of sulfite or bisulfite reagents to effect this reaction has been well-studied. The use of sulfite or bisulfite reducing agents to modify the viscosity, flow properties and processability of soy protein specifically is also known in the area of modification of vegetable proteins to prepare texturized proteins for use as meat or dairy product analogues (U.S. Patent 3,607,860, U. S. Patent 3,635,726, U. S. Patent 4,038,431; U. S. Patent 4,214,009, U. S. Patent 4,349,576, U. S. Patent 4,608,265). Use of sulfite in combination with soy protein isolate as a wood adhesive is also known and has been shown to greatly lower the viscosity. (U. Kalapathy, , N.S. Hettiarachchy, D. Myers, K.C. Rhee, *JOACS*, 73(8), p 1063).

Protein treatments with reducing agents are known in other applications. European patent application EP 0969056A1 describes a coatings prepared from a protein and a crosslinking agent wherein the protein can be modified with a reducing agent. The crosslinking agent used in this invention can be among others, an epichlorohydrin-modified polyamine, an epichlorohydrin-modified polyamide, an epichlorohydrin-modified polyamidoamine or an epichlorohydrin-modified amine-containing backbone polymer.

One preferred type of soy for use in the present invention is soy flour, preferably 20 PDI or higher.

The azetidinium functionalized polymer component of the present invention is typically a water-soluble material that contains primary amine, secondary amine that have been functionalized with epichlorohydrin which then undergoes cyclization to form the azetidinium functionality. Some polymers that may be functionalized with epichlorohydrin and used in the present invention are: polyamidoamines, , polydiallylamine. polyethylenimine [PEI], polyvinyl amine, chitosan, and amine-epichlorohydrin polymers.

One preferred azetidinium functionalized polymer for the present invention is amine-epichlorohydrin polymers. One particularly useful such polymer is Hercules CA1400 available from Hercules Incorporated, Wilmington, DE. Amine-epichlorohydrin polymers (AE polymers) are well-known in the art, mainly for use as wet-strengthening agents for paper products.

Polyamidoamine-epichlorohydrin polymers (PAE polymers) are one subset of the amine-epichlorohydrin polymers (AE polymers). These polymers are characterized by the presence of reactive azetidinium functionality and amide functionality in the backbone. These thermosetting materials rely on the azetidinium functionality as the reactive cross-linking moiety. One type of PAE polymer that is particularly well-suited for use in this invention is disclosed in U.S. Patent Application US2008/0050602.

In one preferred embodiment of the invention the azetidinium functionalized polymer is a polyamidoamine-epichlorohydrin polymer.

AE polymers are produced as aqueous solutions with solids contents ranging from about 10% to about 50%.

Adhesives based on the combination of AE polymers and proteins are a fairly recent development. U.S. Patent 7,252,735 discloses the use of PAE polymers and soy protein with a ratio of protein to PAE polymer ranging from 1:1 to about 1000:1, more particularly from about 1:1 to about 100:1, based on dry weight. These adhesives provide greatly improved adhesive properties under wet conditions compared to adhesives based on soy protein only. Another beneficial feature of these adhesives is that they have no added formaldehyde, and thus do not contribute to formaldehyde emissions in wood products made with them.

Although the use of reducing agents in protein compositions is well-known and the use of AE polymers in combination with proteins as adhesives is known, the combination of a reducing agent such as a sulfite or bisulfite in an AE polymer-containing adhesive composition is not necessarily a reasonable composition to one skilled in the art. This is because it is known that reducing agents such as sulfite and bisulfite can react with the azetidinium functionality of an AE polymer and render it ineffective as a cross-linking agent. This reaction was disclosed by Espy as it relates to the degradative effect of sulfite ion on AE wet strength resin performance in papermaking applications. [H. H. Espy "Alkaline-Curing Polymeric Amine-Epichlorohydrin Resins" in Wet Strength Resins and Their Application, L. Chan, Ed., p. 29, TAPPI Press, Atlanta GA (1994)]. The reaction of Sulfite Ion with azetidinium functionality is shown in Chemical Reaction formula 1

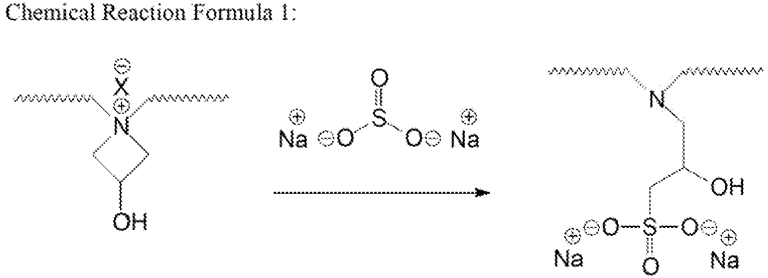

Evidence of such a reaction is shown through Examples 63-66. In these experiments SBS was added to PAE resin and the functionality monitored over time at room temperature using NMR spectroscopy. The results, shown in Table 15, show that the functionality at neutral pH or above is quickly reduced by at least 20%. This was done using SBS levels contained within the ranges outlined in the current invention. While it is known that PAE resins are effective at crosslinking hair in a permanent state after bisulfite reduction, (US Patent 3,227,615), previously prepared solutions of PAE and sodium bisulfite are not acceptable for this purpose. Rather than forming permanent hair set formulations, which requires crosslinking with the hair protein, the combination gave ionic bonding formulations suitable only for temporary hair setting. For this reason it would be unexpected that solution of sodium bisulfite and protein would result in an adhesive composition that was water resistant. To further expound on this point, the known reaction of bisulfite with azetidinium functionality would lead one to believe that a combination of these two species would result in a material that was incapable of acting as a thermosetting polymer, or would have very poor properties when used as a thermosetting adhesive.

Surprisingly, it has been seen that a combination of soy flour, a PAE polymer and sodium metabisulfite provides a stable adhesive composition with good wet and dry strength properties and are capable of passing the ANSI/HPVA HP-1-2004-4.6 3-cycle soak test for plywood.

The viscosity-modifying component of the present invention imparts beneficial properties to the adhesive composition such as improved viscosity properties. The viscosity-modifying component can be a sulfite, bisulfite or metabisulfite salt. The viscosity-modifying agent can also be selected from inorganic reducing agents such as sodium sulfite, potassium sulfite, lithium sulfite, ammonium sulfite, sodium bisulfite, potassium bisulfite, lithium bisulfite, ammonium bisulfite, sodium metabisulfite, potassium metabisulfite, lithium metabisulfite or ammonium metabisulfite. The viscosity-modifying agent may also be an organic reducing agent such including thiols, and bisulfite adducts of aldehydes. Suitable thiols include, but are not limited to, cysteine, 2-mercaptoethanol, dithiothreitol, and dithioerythritol. Some classed of suitable thiols include the alkyl thiols such as methanethiol, ethanethiol, 1-propanethiol, 1-butanethiol, 1-pentanethiol, 1-octanethiol, 2-propanethiol, 2-methyl-1-propanethiol, cyclohexyl mercaptan, or allyl mercaptan; the dithiols such as ethanedithiol, 1,3-propanedithiol, 1,4-butanedithiol, 2,3-butanedithiol, 1,5-pentanedithiol, 1,5-hexanedithiol, dithiothreitol, or dithioerythritol; hydroxythiols such as 2-mercaptoethanol, 1-mercapto-2-propanol, 3-mercapto-1-propanol or 3-mercapto-2-butanol; and thioethers such as 1-mercaptoethylether

The present invention provides compositions having lower viscosity values and also improved viscosity stability as compared to prior art with similar solids content. These properties are attained by the inclusion of reducing agents, which are comprised of sulfites and thiols. One particularly effective additive is sodium hisulfite/sodium metabisulfite (SBS).

One preferred embodiment of the invention comprises a soy flour having a protein dispersibility index (PDI) of 20 or more, a polyamidoamine-epichlorohydrin polymer (PAE polymer) and sodium metabisulfite, sodium bisulfite or sodium sulfite, A more preferred, embodiment comprises a soy flour having a PDI of 70 or more, a PAE polymer and sodium metabisulfite, sodium bisulfite or sodium sulfite. A most preferred embodiment comprises a soy flour having a PDI of 80 or more, a PAE polymer and sodium metabisulfite, sodium bisulfite or sodium sulfite.

Another embodiment of the invention is the use of the viscosity-modifying additives in a urea-denatured soy flour dispersion. Urea-denatured soy dispersions are described in U. S. Patent application 20080021187. The use of the viscosity modifier can provide lower viscosity in these compositions and can allow one to prepare stable dispersions with higher solids values than could be achieved without the use of a viscosity modifier.

### Preparation and Use of the Inventive Composition

The compositions of the invention are prepared by combining the components in an aqueous medium and mixing well. The viscosity-modifying agent (sulfite reducing agent, thiol) can be added at any point in the mixing process. The point of addition for the viscosity-modifying agent may depend on the specific type of protein used. Typically, addition before the protein is desired as it provides an enhanced reduction of viscosity during the mixing/addition process. After all of the formulation components have been added they are thoroughly mixed to produce a homogeneous material. Additional materials can be added to the formulation such as non-aqueous diluents or solvents, defoamers, surfactants and acids or bases used for pH adjustment. We have seen that the adhesive stability is very dependent on pH. At pH values of greater than 7.0, adhesive stability can be problematical. Although the initial viscosity may be reduced significantly, the viscosity can increase dramatically over a period of a few hours at pH values of above 7. The pH of this inventive composition can range from about 4.5 to less than 7.5, more preferably from about 5 to less than 7 and most preferably from about 5.5 to about 6.5. Lower pH values provide better viscosity stability, but adhesive performance will drop off if the pH is too low.

The ratio of protein to azetidinium functionalized polymer of the composition can vary from 1:1 to about 1000: 1, preferably from about 1:1 to about 100:1, more preferably from 1:1 to about 15:1, and most preferably between 1.5:1 to 7:1 based on dry weight.

The viscosity-modifying component of the composition can comprise from about 0.001% by weight of the protein component of the composition to about 10% by weight of the protein component of the composition. (1 part modifier to 100,000 parts protein to 1 part modifier to 10 parts protein. Preferably the viscosity-modifying component can comprise from about 0.025% by weight based on the weight of the protein component of the composition to about 5.0% by weight based on the weight of the protein component of the composition. More preferably the viscosity-modifying component can comprise from about 0.025% by weight based on the weight of the protein component of the composition to about 3.0% by weight based on the weight of the protein component of the composition.

The total solids content of the composition can range from 5% to 75%, more preferably in the range of 25% to 65% and most preferably between 30% and 60%. In one preferred embodiment the solids content of the composition is greater than 25 %, in another preferred embodiment the solids content is greater than 30 %.

The viscosity of the composition is dependent on the ratio of ingredients and total solids. The limitation of viscosity is ultimately equipment dependent That is to say, higher viscosity materials require more powerful and more costly mixers, pumps and processing equipment. Preferable the viscosity is less than 200,000 cps (centipoise), more preferably less than 150,000, even more preferably less than 100,000. The viscosity can range from 1,000 to 200,000 cps, more preferably 2,000 to 100,000 cps and most preferably between 2,000 and 50,000 cps.

Another embodiment of the invention is the application of these compositions for making engineered wood products and other composite materials. The compositions can be applied by a variety of methods such as roller coating, knife coating, extrusion, curtain coating, foam coaters and spray coaters, one example of which is the spinning disk resin applicator. Although requirements vary for different grades and types of applications, lower viscosity is usually a benefit when using these application techniques, especially for spraying of adhesive formulations.

In addition to lignocellulosic substrates, the adhesive compositions can be used with substrates such as glass wool, glass fiber and other inorganic materials. The adhesive compositions can also be used with combinations of lignocellulosic and inorganic substrates.

### EXAMPLES

### Examples 1-4: Effects of Various Viscosity Modifiers

PAE/soy adhesive formulations made were made with no sodium bisulfite "SBS"', with 0.5% sodium bisulfite, by weight based on total soy weight and 0.5% NaCl, both based on soy weight (Table 1). The sodium bisulfite was obtained from Aldrich Chemical Co., Milwaukee WI, and had a purity of>99%, the sodium chloride was obtained from J.T. Baker, Phillipsburg, NJ, and was >99% purity. All formulations were prepared by combining distilled water (23 g). Kymene® 624 PAE polymer with a solids content of 20% (11.25 g, available from Hercules incorporated., Wilmington DE), and mixed with an overhead stirrer equipped with a propeller type mix blade for 2 minutes at 900 rpm. A quantity of Prolia® 100/90 soy flour (15.75 g, available from Cargill Inc., Minneapolis, MN.) was then added to the stirred mixture, stirring was continued for 5 minutes at 900 rpm. At this point the additive (if any) was added and mixed for an additional 3 minutes, and finally the pH was adjusted to about 7.0 using a 50% aqueous solution of sodium hydroxide. The viscosity of the formulations were then measured and was monitored with time.

The viscosity was measured with a Brookfield LV DV-E viscometer using spindle #4 at 1.5 rpm in examples 1 -4. The samples were stirred vigorously by hand for 30 seconds immediately prior to the viscosity measurement to provide a uniform shear history for the samples.

These data show that the viscosity of a PAE/soy adhesive is significantly reduced by the addition of sodium bisulfite. This effect is much stronger than any viscosity modification provided by the comparison example in which 0.5% sodium chloride by weight based on soy weight was added. In fact, the effect of added of sodium chloride is negligible. This effect on viscosity is also in sharp contrast to the viscosity profile seen when sodium bisulfite is added to the soy flour with no PAE polymer present. In this case of sodium chloride the viscosity is much lower than the control sample and continues to decrease with time. At some point, one would expect to see a drop in adhesive performance as viscosity continues to decline. The combination of bisulfite with a soy flour in the presence of a PAE polymer, by contrast, shows an initial drop in viscosity and some further slight reduction in viscosity, but not nearly as drastic as that seen with the no added PAE sample. This unexpected constancy of viscosity with time is a benefit to the end user of these adhesive formulations in that it allows for better control of adhesive properties and also provides much better control over the transfer and application of the adhesive composition to a desired substrate. That is to say, the combination of soy flour, PAE resin and sodium bisulfite provides a product having a lower viscosity that is stable with time. The control formulation has a high viscosity that increases with time while a soy flour/sodium bisulfite shows a lowered viscosity, but this product's viscosity declines continuously with time. The properties of lowered viscosity and viscosity stability are extremely advantageous to a manufacturer using a soy-based adhesive.

**Table 1. Viscosity and pH data for PAE/Soy Adhesive Formulations**

| Example | Additive | Initial ρH | Initial visc. (cps) | 1 hr visc. ( cps) | 2 hr visc. (cps) | 3.5 hr visc. (cps) | 4 hr visc. (cps) | 4.5 hr visc. (cps) | 5 hr visc. (cps) | Final pH |
|---|---|---|---|---|---|---|---|---|---|---|
| 1 | Control | 7.12 | 310,400 | 262,000 | 230,800 | - | 342,600 | - | 352,400 | 6.98 |
| 2 | 0.5% NaHSO3 | 7.15 | 182,000 | 136,800 | 101,600 | - | 121,200 | - | 149,200 | 6.78 |
| 3 | 0.5% NaCl | 6.9 | 306,000 | 261,600 | 250,400 | 250,400 | - | 290,400 | - | 6.8 |
| 4 | 0.5% NaHSO3, No PAE | 6.95 | 127,600 | 21,600 | - | 22,800 | - | 18,400 | - | 6.91 |

### Examples 5-10 Effects of Various Viscosity Modifiers

PAE/soy adhesive formulations made were made with no additive, with varying amounts of sodium bisulfite, varying amounts of cysteine, and one level of an Alcalase® enzyme (Table 2). The sodium bisulfite was obtained from Aldrich Chemical Co., Milwaukee WI and had a purity of >99%. The L-cysteine was obtained from Aldrich Chemical Co., Milwaukee WI and was >97% purity. The Alcalase® 2.4L was from Novozymes, Franklinton, NC. All formulations were prepared by combining distilled water (23 g), Kymene® 624 (11.25 g, available from Hercules Incorporated, Wilmington DE), and mixed with an overhead stirrer equipped with a propeller type mix blade for 2 minutes at 900 rpm. At this point the additive (if any) was added. The additive percentages are based on soy weight, with the Alcalase® treated as 100% actives. A quantity of Prolia® 100/90 soy flour (15.75 g, Cargill Inc., Minneapolis, MN.) was then added to the stirred mixture and stirring was continued for 5 minutes at 900 rpm. Finally the pH was adjusted to about 7.0 using a 50% aqueous solution of sodium hydroxide. The viscosities of the formulations were then measured as described for the previous examples.

**Table 2. Viscosity and Adhesion data for PAE/Soy Adhesive Formulations**

| Example | 5 | 6 | 7 | 8 | 9 | 10 |
|---|---|---|---|---|---|---|
| Additive | Control | 0.25% SBS | 0.5% SBS | 0.25% Cysteine | 0.25% Cysteine | 0.5% Alcalase® 2.4LFG |
| Vise (cps) | 1,570,000 | 190,000 | 148,000 | 215,000 | 145,000 | 242,000 |
| Spindle/speed | #4, 0.3 rpm | #4, 1.5 rpm | #4, 1.5 rpm | #4, 1.5 rpm | #4, 1.5 rpm | #4, 1.5 rpm |
| Dry ABES (psi) | 1,100 | 1,065 | 1.050 | 1,100 | 1,072 | 905 |
| Wet ABES (psi) | 463 | 432 | 419 | 460 | 450 | 310 |

The data shows that both inorganic and organic reducing agents can be effective in reducing the viscosity of the base adhesive. Increasing the level of additive has an additive effect of lowering the viscosity. A standard Alcalase® enzyme can also be effective in reducing the viscosity of the adhesive.

The adhesives from examples 5-10 were tested using the Automated Bonding Evaluation System (ABES) from Adhesive Evaluation System Inc., Corvallis, OR. The samples were tested using maple veneer as the substrate with an overlap of 0.5 cm. The dry adhesion samples were pressed for 2 minutes at 120 °C, cooled with forced air for 5 seconds with the shear strength tested immediately after the cooling step. The wet adhesion samples were identical except that instead of being tested immediately they were removed from the ABES unit, soaked in water for 1 hour and then replaced in the ABES unit to be tested while wet. The results of the dry and wet adhesion testing for each adhesive are listed in Table 2 and are shown in Figure 2. The plot shows the mean of 5 samples with the error bars representing one plus or minus standard deviation.

The shear tensile results show that use of either of the reducing agents does not have a significant effect on the wet/dry tensile. The Alcalase® enzyme however had a significant detrimental effect on the adhesive resulting in a 33 percent decease in wet tensile strength.

### Examples 11-16 - Soy flour type

**Table 3. Effect of Soy Flour Type on Adhesive Viscosity.**

| Example Number | Soy Flour type | g Soy | g CA 1000 | g Water | % SBS | pH | Viscosity (cP) | Spindle /rpm |
|---|---|---|---|---|---|---|---|---|
| 11 | Prolia 100/90 | 31.5 | 22.5 | 64 | 0.00% | 5.66 | 178.000 | 7/10 |
| 12 | Prolia 100/90 | 31.5 | 22.5 | 64 | 0.50% | 5.58 | 22,000 | 7/20 |
| 13 | Prolia 200/20 | 31.5 | 22.5 | 64 | 0.00% | 5.78 | 250.000 | 7/10 |
| 14 | Prolia 200/20 | 31.5 | 22.5 | 64 | 0.50% | 5.72 | 77,000 | 7/20 |
| 15 | Kaysoy | 31.5 | 22.5 | 64 | 0.00% | 5.72 | 78,000 | 7/10 |
| 16 | Kaysoy | 31.5 | 22.5 | 64 | 0.50% | 5.65 | 84,000 | 7/20 |

These samples were all prepared using CA1000 PAE polymer with a solids content of 20%, available from Hercules Incorporated, Wilmington DE, and sodium bisulfite obtained from Aldrich Chemical Company, Milwaukee WI, >99% purity. The soy flours used in this study were Prolia® 100/90 defatted soy flour and Prolia® 200/20 defatted soy flour, both available from Cargill, Inc., Minneapolis MN and Kaysoy® toasted soy flour, available from Archer-Daniels Midland (ADM), Decatur IL, The formulations were made with a recipe of 64% water, 22.5% CA 1000 PAE polymer having a solids content of 20% and 31.5% soy and 0.5%) sodium metabisulfite based on batch weight. The formulation details and their properties are shown in Table 3. These ingredients were added in the sequence water, sodium bisulfite, CA1000, soy. The viscosity of the samples was measured as described for the previous examples using the spindle/rpm combinations shown in Table 3.

### Examples 17 to 24 Use of Sodium Sulfite for Viscosity Reduction

A series of soy flour/PAE resin adhesive formulations were prepared using sodium sulfite as the viscosity reducing agent. These formulations were prepared by mixing 129.1g water, 0.42g Advantage 357 Defoamer (Hercules Incorporated, Wilmington. DE) and 102.4g Hercules CA1920A PAE polymer having a solids content of 20% (Hercules Incorporated, Wilmington DE) in a 600 mL stainless steel beaker. Sodium sulfite (98+%, ACS Reagent, Aldrich Chemical, Milwaukee WI) was then added and the mixture was stirred until the sodium sulfite had dissolved (about 1-2 minutes). The quantity of sodium sulfite used in these examples is shown in Table 4. A quantity of 108.0g Prolia 200/90 soy flour was then added to the stirred mixture and was stirred at 1,000 rpm for 8 minutes. The pH was then adjusted to 7.2 with 25% NaOH. The viscosity of these formulations at various times is shown in Table 4. Viscosity values were measured with a Brookfield RV viscometer using a #6 spindle at the rpm value shown in Table 4. The viscosity samples were all vigorously stirred for 30 seconds prior to taking the reading in order to provide a uniform shear history for the samples.

**Table 4. Soy-PAE Formulations with Added Sodium Sulfite**

| Example Number | g SS | SS (PHS) | Time (hrs) | pH | RV #610 rpm | RV Spindle/RPM |
|---|---|---|---|---|---|---|
| 17a | 0.00 | 0.00 | 0.00 | 7.14 | 218,000 | 6/2.5 |
| 17b | 0.00 | 0.00 | 4.72 | 7.00 | 205,500 | 6/2.5 |
| 17c | 0.00 | 0.00 | 6.30 | 6.99 | 235,800 | 6/2.5 |
| 18a | 0.18 | 0.17 | 0.00 | 7.40 | 109,000 | 6/4 |
| 18b | 0.18 | 0.17 | 4.83 | 7.19 | GEL | |
| 19a | 0.35 | 0.34 | 0.00 | 7.19 | 32,000 | 6/10 |
| 19b | 0.35 | 0.34 | 4.32 | 7.04 | GEL | |
| 20a | 0.70 | 0.68 | 0.00 | 7.23 | 28,100 | 6/10 |
| 20b | 0.70 | 0.68 | 3.95 | 7.06 | 500,000 | 6/2 |
| 21a | 1.40 | 1.36 | 0.00 | 7.16 | 22.300 | 6/10 |
| 21b | 1.40 | 1.36 | 3.58 | 7.01 | 399,500 | 6/2 |
| 22a | 2.10 | 2.05 | 0.00 | 7.16 | 21,500 | 6/10 |
| 22b | 2.10 | 2.05 | 2.02 | 7.07 | 82,800 | 6/10 |
| 22c | 2.10 | 2.05 | 3.35 | 7.03 | 214,000 | 6/4 |
| 23a | 2.80 | 2.73 | 0.00 | 7.18 | 20,600 | 6/10 |
| 23b | 2.80 | 2.73 | 1.38 | 7.11 | 58,900 | 6/10 |
| 23c | 2.80 | 2.73 | 2.58 | 7.07 | 109,500 | 6/4 |
| 24a | 3.50 | 3.41 | 0.00 | 7.15 | 20,700 | 6/10 |
| 24b | 3.50 | 3.41 | 1.02 | 7.10 | 49,800 | 6/10 |
| 24c | 3.50 | 3.41 | 2.22 | 7.07 | 65,900 | 6/4 |

| | | | | | | |
|---|---|---|---|---|---|---|
| PHS means part per hundred parts of Soy | | | | | | |

These results show that increasing levels of sodium sulfite result in lower initial viscosity levels. However, the formulations prepared with added sodium sulfite do not always have better viscosity stability than the control sample. Examples 18, 19, 20 and 21 all had higher viscosities than the control sample at 4 hours, despite having significantly lower initial viscosities.

### Examples 25-30 Effect of pH on Viscosity Stability

A series of soy/PAE polymer adhesive formulations was prepared to examine the effect of pH on viscosity stability. Samples 25 and 26 were prepared with a solids content of 36%. To a 600 mL stainless steel beaker was added 83.77g water, 0,28g Advantage 357 Defoamer (Hercules Incorporated, Wilmington DE) and 65.00g Hercules CA1 920A PAE polymer having a solids content of 20% (Hercules Incorporated, Wilmington DE). After mixing these ingredients well sodium metabisulfite (>99%, ReagentPlus, Aldrich Chemical, Milwaukee WI) was then added and the mixture was stirred until the sodium metabisulfite had dissolved (about 1-2 minutes). The quantity of sodium metabisulfite used in these examples is shown in Table 5. A quantity of 68.42g Prolia 200/90 soy flour (Cargill Inc., Minneapolis MN) was then added to the stirred mixture and was stirred at 1,000 rpm for 8 minutes. A 25% NaOH solution was used to adjust the pH of Example 25 to 7.2 and Example 26 to 6.5. Examples 27 and 28 were prepared in a similar manner except that 77.68g water were used in the recipe. Example 27 was adjusted to pH 7.2 and Example 28 was adjusted to pH 6.5 with 25% NaOH. Examples 29 and 30 were prepared in a similar manner except that 71.92g water were used in the formulation. Example 29 was adjusted to pH 7.2 and Example 30 was adjusted to pH 6.5 with 25% NaOH. The viscosity of these formulations at various times is shown in Table 5. Viscosity values were measured with a Brookfield RV viscometer using a #6 spindle. The viscosity samples were all vigorously stirred for 30 seconds prior to taking the reading, in order to provide a uniform shear history for the samples.

**Table 5. Properties of Examples 25-30 (pH effect over time)**

| Example Number | Total Solids | g SMBS | SMBS (PHS) | Time (hrs) | pH | RV Viscosity (cP) | Spindle/RPM |
|---|---|---|---|---|---|---|---|
| 25a | 36% | 1.13 | 1.74 | 0.00 | 7.13 | 19,000 | 6/10 |
| 25b | 36% | 1.13 | 1.74 | 4.38 | 6.98 | 304,000 | 6/2 |
| 25c | 36% | 1.13 | 1.74 | 6.25 | 6.96 | 450,000 | 6/2 |
| 26a | 36% | 1.13 | 1.74 | 0.00 | 6.59 | 16,100 | 6/10 |
| 26b | 36% | 1.13 | 1.74 | 3.67 | 6.56 | 44,600 | 6/10 |
| 26c | 36% | 1.13 | 1.74 | 5.50 | 6.53 | 59,000 | 6/10 |
| 27a | 37% | 1.13 | 1.74 | 0.00 | 7.16 | 21.300 | 6/10 |
| 27b | 37% | 1.13 | 1.74 | 3.12 | 7.03 | 499,500 | 6/2 |
| 27c | 37% | 1.13 | 1.74 | 4.00 | 7.00 | GEL | |
| 28a | 37% | 1.33 | 1.74 | 0.00 | 6.47 | 19,700 | 6/10 |
| 28b | 37% | 1.13 | 1.74 | 1.90 | 6.46 | 36,600 | 6/10 |
| 28c | 37% | 1.33 | 1.74 | 2.62 | 6.46 | 50,400 | 6/10 |
| 29a | 38% | 1.13 | 1.74 | 0.00 | 7.15 | 28,700 | 6/10 |
| 29b | 38% | 1.13 | 1.74 | 1.50 | 6.99 | 298,500 | 6/2 |
| 29c | 38% | 1.13 | 1.74 | 3.38 | 7.02 | 988,000 | 6/1 |
| 30a | 38% | 1.33 | 1.74 | 0.00 | 6.56 | 23,900 | 6/10 |
| 30b | 38% | 1.13 | 1.74 | 1.00 | 6.58 | 41,000 | 6/10 |
| 30c | 38% | 1.13 | 1.74 | 2.50 | 6.54 | 57,800 | 6/10 |

| | | | | | | | |
|---|---|---|---|---|---|---|---|
| PHS means part per hundred parts of Soy | | | | | | | |

As expected, the viscosity increased with increasing solids level. However, quite surprisingly, it was seen that the SMBS-modified adhesive formulations had much better viscosity stability at pH 6.5 compared to pH 7.2. The pH 7.2 samples had viscosity values well over 100,000 after several hours while the viscosity values of the pH 6.5 samples were all below 100,000 after several hours.

### Examples 31-33 Adhesive Formulations with Varied SMBS Levels Used to Make Panels

SMBS-modifled soy/PAE polymer formulations were prepared with varied SMBS levels. To a 600 mL stainless steel beaker was added 137.24g water for Example 31, 138.8g water for Example 32 and 140.39g water was added for Example 33. A quantity of 0.44g Advantage 357 Defoamer (Hercules Incorporated, Wilmington DE) and 104.76g Hercules CA1920A PAE polymer having a solids content of 20% (Hercules Incorporated, Wilmington DE) was then added to each formulation. After mixing these ingredients well, sodium metabisulfite (>99%, ReagentPlus, Aldrich Chemical, Milwaukee WI) was then added and the mixture was stirred until the sodium sulfite had dissolved (about 1-2 minutes). The quantity of sodium sulfite used in these examples is shown in Table 6. A quantity of 115.79g Prolia 200/90 soy flour (Cargill Inc., Minneapolis MN) was then added to the stirred mixture and was stirred at 1.000 rpm for 8 minutes. A 25% NaOH solution was used to adjust the pH to 6. The viscosity was measured using an RV viscometer using the spindle/rpm combinations shown in Table 5. The samples were stirred vigorously by hand for 30 seconds immediately prior to the viscosity measurement to provide a uniform shear history for the samples.

These formulations were used to prepare 3-ply poplar plywood panels, The panels had dimensions of 12" X 12", The adhesive application rate was 20-22 g/ft.². There was no closed assembly time or cold pressing used when making these panels. The panels were hot pressed at either 225°F (107°C) for examples 31a, 32a and 33a or 235°F (113°C) for examples 31b, 32b and 33b, for 3 minutes at 150 psi. The panels were kept in a 74°F/50% RH room for 48 hours to condition prior to testing. The panels were tested for 3-cycle soak performance using the ANSI/HPVA HP-1-2004-4.6 procedure. The 3-cycle soak testing was performed using 4 test pieces per condition. Shear adhesive bond strength was measured using ASTM D-906 procedure. Dry shear values are the average of 4 test samples and wet shear values are the average of 6 samples.

**Table 6. Panel Preparation and Testing with Examples 31-33**

| | | | | | | | | | | |
|---|---|---|---|---|---|---|---|---|---|---|
| Adhesive Formulations | | | | Panel Testing Results | | | | | | |

| Example # | g SMBS | SMBS (PHS) | Viscosity (cP) RV ≠6 @ 10 rpm | pH | 3-Cycle Soak Pass | Shear Strength Testing | | | | |
|---|---|---|---|---|---|---|---|---|---|---|
| | | | | | | Dry Shear (pst) | SD | % Dry WF | Wet Shear (psi) | SD |
| **31a** | 0.92 | 0.84 | 18,000 | 6.03 | 50% | 237 | 55 | 3 | 84 | 29 |
| **32a** | 1.85 | 1,68 | 16.00 | 5.98 | 0% | 236 | 73 | 0 | 60 | 36 |
| **33a** | 2.77 | 2.52 | 15,400 | 5.98 | 0% | 154 | 30 | 0 | 0 | 0 |
| **31b** | 0.92 | 0.84 | 18,000 | 6.03 | 75% | 247 | 65 | 6 | 121 | 34 |
| **32b** | 1.85 | 1,68 | 16,500 | 5.98 | 0% | 253 | 65 | 6 | 84 | 25 |
| **33b** | 2.77 | 2.52 | 15,400 | 5.9S | 0% | 208 | 69 | 0 | 19 | 11 |

| | | | | | | | | | | |
|---|---|---|---|---|---|---|---|---|---|---|
| PHS means part per hundred parts of soy SD means Standard Deviation WF means wood failure | | | | | | | | | | |

The panel fabrication conditions (no closed assembly time, no cold press, relatively low temperatures and short press time) were chosen for this study in order to provide a good differentiation between the test formulations. These results show that the level of SMBS can have a very significant effect on adhesive properties. Panels made with the adhesive of Example 31 (lowest level of SMBS) were the only panels that did not have a 0% passing score for the 3-cycle soak test. Wet shear strength was inversely proportional to the SMBS level, with the highest level of SMBS resulting in almost no wet strength at all. Increasing the cure temperature improved the panel properties. Even higher temperatures and longer press times would further improve properties. Increasing the ratio of PAE polymer to soy would also improve panel properties as would the inclusion of closed assembly and cold-pressing steps. These examples illustrate that optimal adhesive performance, especially wet strength, will be achieved when using a minimal level of sodium metabisulfite viscosity-modifying additive.

### Example 34: Comparative Example

Example 34 (non-SMBS) was prepared by mixing 104.68g water, 0.25g Advantage 357 Defoamer (Hercules Incorporated, Wilmington DE) and 90.74g Hercules CA1920A PAE polymer having a solids content of 20% (Hercules Incorporated, Wilmington DE) to a 600 mL stainless steel beaker and mixing well for about 2 minutes. A quantity of 54.58g Prolia 200/90 soy flour (Cargill Inc., Minneapolis MN) was then added to the stirred mixture and was stirred at 1,000 rpm for 8 minutes. The pH was adjusted from 5.24 to 7.19 using a 2.2 g of a 50% NaOH solution. The viscosity of this adhesive formulation was 25,200 cP, as measured with an RV viscometer using a #7 spindle at 20 rpm. The sample was stirred vigorously by hand for 30 seconds immediately prior to the viscosity measurement to provide a uniform shear history.

### Example 35: SMBS-Modified Soy/PAE Polymer Formulation

An SMBS-modified soy/PAE polymer adhesive formulation was compared to a non-SMBS containing soy/PAE polymer adhesive formulation with a similar viscosity (Example 34). Example 35 was prepared by mixing 64.50g water, 0.25g Advantage 357 Defoamer (Hercules Incorporated, Wilmington DE) and 115.05g Hercules CAI920A PAE polymer having a solids content of 20% (Hercules Incorporated, Wilmington DE) to a 600 mL stainless steel beaker and mixing well for about 2 minutes. A quantity of 1.25g sodium metabisulfite (>99%, ReagentPlus, Aldrich Chemical, Milwaukee WI) was added and the contents of the beaker were stirred for 2 minutes. A quantity of 69.20g Prolia 200/90 soy floor (Cargill Inc., Minneapolis MN) was then added to the stirred mixture and was stirred at 1,000 rpm for 8 minutes. The pH was adjusted from 5.16 to 6.98 using 3,4 g of a 50% NaOH solution. The viscosity of this adhesive formulation was 18,800 cP, as measured with an RV viscometer using a #7 spindle at 20 rpm. The sample was stirred vigorously by hand for 30 seconds immediately prior to the viscosity measurement to provide a uniform shear history.

The Example 34 and 35 formulations were used to prepare 3-ply maple and poplar plywood panels. The panels had dimensions of 12" X 12". The adhesive application rate was 20-22 g/ft.². The closed assembly time was 10 minute and the panels were cold pressed for 5 minutes at 100 psi. The panels were hot pressed at 250°F for 4 minutes at 150 psi. The panels were kept in a 74°F/50% RH room for 48 hours to condition prior to testing. The panels were tested for 3-cycle soak performance using the ANSI/HPVA HP-1-2004-4.6 procedure. The 3-cycte soak testing was performed using 4 test pieces per condition. Shear adhesive bond strength was measured using ASTM D-906 procedure. Dry shear values are the average of 4 test samples and wet shear values are the average of 6 samples, Properties of the formulations and the panels made with them are shown in Table 7.

**Table 7. Properties of Example 40 & 41 Formulations and Panels Made from Them**

| Example Number | TS | SMBS (PHS) | Panel Type | Visc. (cP) (1) | pH | Dry Shear Testing | | | Wet Shear Testing | | | 3-Cycle Soak |
|---|---|---|---|---|---|---|---|---|---|---|---|---|
| | | | | | | PSI | SD | %WF | PSI | SD | %WF | Pass |
| 34a (Comp.) | 28% | 0% | M/M/M | 25,200 | 7.19 | 479 | 45 | 61 | 256 | 40.2 | 2 | 100% |
| 35a | 36% | 1.9% | M/M/M | 18,800 | 6.97 | 506 | 60 | 87 | 224 | 48.4 | 8 | 100% |
| 34b (Comp) | 28% | 0% | P/P/P | 25,200 | 7.19 | 315 | 76 | 45 | 139 | 32.5 | 3 | 100% |
| 35b | 36% | 1.9% | P/P/P | 18,800 | 6 97 | 337 | 57 | 81 | 131 | 27.2 | 3 | 100% |

| | | | | | | | | | | | | |
|---|---|---|---|---|---|---|---|---|---|---|---|---|
| 1. All viscosity values measured with an RV viscometer using a #7 spindle at 20 rpm. 2. PHS means part per hundred parts of Soy; SD means standard deviation WF means wood failure | | | | | | | | | | | | |

The use of SMBS in the adhesive formulation allows one to increase the solids from 28% to 36% while still having a lower viscosity. The panel test results show that the SMBS-modified formulation gives equivalent or better results than a similar PAE/soy adhesive formulation with no added SMBS.

### Example 36 ... Panels Made at Varied Times (Adhesive Age Effect)

A soy/PAE/SMBS formulation was prepared by adding 116.11g water, 0.45g Advantage 357 Defoamer (Hercules Incorporated, Wilmington DE) and 207.08g CA1920A PAE polymer having a solids content of 20% (Hercules Incorporated, Wilmington DE) to a 600 mL stainless steel beaker and mixing well for 2 minutes. A quantity of 124.56g Prolia 200/90 soy flour was added to the contents of the beaker and the mixture was stirred at 1,000 rpm for 8 minutes. At this point 2.25g sodium metabisulfite (>99%, ReagentPlus, Aldrich Chemical, Milwaukee WI) was added to the beaker and the mixture was stirred for an additional 2 minutes at 1,000 rpm. The pH of the mixture was then adjusted from 5.18 to 7.00 using 5.90g of 50% NaOH. This adhesive preparation had a viscosity of 27,500 cP when measured with an LV Brookfield viscometer using a #4 spindle at 6 rpm. The sample was stirred vigorously by hand for 30 seconds immediately prior to the viscosity measurement to provide a uniform shear history.

Three-ply poplar and maple panels were made with the adhesive of this example 36 at varied times after the adhesive was made. One set of panels was made immediately after preparing the adhesive and a second set of panels was made three hours after the adhesive was prepared. A spread rate of 21-22 g/ft² was used in preparing the panels. The panels were prepared using conditions of 10 minutes closed assembly time, 5 minutes cold press at 100 psi and 4 minutes hot press at 250°F and 150 psi. The panels were kept in a 74°F/50% RH room for 48 hours to condition prior to testing. The panels were tested for 3-cycle soak performance using the ANSI/HPVA HP-1-2004-4.6 procedure. The 3-cycle soak testing was performed using 4 test pieces per condition. Shear adhesive bond strength was measured using ASTM D-906 procedure. Dry shear values are the average of 4 test samples and wet shear values are the average of 6 samples. Properties of the formulations and the panels made with them are shown in Table 8.

**Table 8. Properties of Panels Made with Example 36 Adhesive**

| Hrs. After Adhesive Prep. | Panel Type | Adhesive Shear Strength Testing | | | | | | 3-Cycle Soak Pass |
|---|---|---|---|---|---|---|---|---|
| | | Dry Shear (psi) | SD | % Wood Pull | Wet Shear (psi) | SD | % Wood Pull | |
| 0 | Maple | 522 | 53 | 61 | 241 | 22 | 3 | 75% |
| 3 | Maple | 498 | 31 | 68 | 195 | 33 | 1 | 100% |
| 0 | Poplar | 317 | 41 | 69 | 143 | 13 | 3 | 100% |
| 3 | Poplar | 326 | 61 | 96 | 167 | 42 | 8 | 100% |

| | | | | | | | | |
|---|---|---|---|---|---|---|---|---|
| SD means standard deviation | | | | | | | | |

These examples show that there is no significant difference in any of the measured panel properties for panels made with fresh SMBS-modified adhesive or adhesive that has aged for 3 hours. This indicates that the reaction of bisulfite with azetidinium is not disrupting adhesive performance under these conditions.

### Examples 37-44 Formulations with Varied PAE Polymer Level. With and Without SMBS

A series of adhesive formulations were prepared with varied levels of PAE polymer both with and without added SMBS (formulations without SMBS are comparative examples). The quantities of additives used in these formulations are shown in Table 9. These formulations were prepared by adding water. Advantage 357 Defoamer (Hercules Incorporated, Wilmington DE) and CA1000 PAE polymer having a solids content of 20% (Hercules Incorporated, Wilmington DE) to a 600 mL stainless steel beaker and mixing well for 2 minutes. Prolia 100/90 soy flour (Cargill, Minneapolis MN) was added to the contents of the beaker and the mixture was stirred at 1,000 rpm for 8 minutes. At this point sodium metabisulfite (>99%, ReagentPlus, Aldrich Chemical, Milwaukee WI) was added to the beaker where indicated, and the mixture was stirred for an additional 2 minutes at 1,000 rpm. The pH of the mixture was then adjusted to 8 with lime (calcium oxide, CaO).

**Table 9. Varied Polymer Level**

| Example Number | g Water | g A-357 DF | g SMBS | g CA1000 PAE Polymer | g Prolia 100/90 | g CaO (Lime) | pH | Total Added | % PAE/Soy |
|---|---|---|---|---|---|---|---|---|---|
| 37 (Comp.) | 138.95 | 0.30 | 0.00 | 60.00 | 101.05 | 1.00 | 8.17 | 301.30 | 12.5 |
| 38 | 139.68 | 0.30 | 1.50 | 59.17 | 99.65 | 2.09 | 8.04 | 302.39 | 12.5 |
| 39 (Comp.) | 125.31 | 0.30 | 0.00 | 77.28 | 97.42 | 1.20 | 7.93 | 301.50 | 16.7 |
| 40 | 126.24 | 0.30 | 1.50 | 76.20 | 96.06 | 2.18 | 8.07 | 302.48 | 16.7 |
| 41 (Comp.) | 115.26 | 0.30 | 0.00 | 90.00 | 94.74 | 1.42 | 7.94 | 301.72 | 20 |
| 42 | 116.33 | 0.30 | 1.50 | 88.75 | 93.42 | 2.61 | 8.01 | 302.91 | 20 |
| 43 (Comp.) | 101.05 | 0.30 | 0.00 | 108.00 | 90.95 | 1.62 | 8.04 | 301.92 | 25 |
| 44 | 102.32 | 0.30 | 1.50 | 106.50 | 89.68 | 2.76 | 7.95 | 303.06 | 25 |

Properties of these adhesive formulations are shown in Table 10. The viscosity of the adhesive formulations was measured using an LV viscometer using the spindle/rpm combinations shown in Table 10. The samples were stirred vigorously by hand for 30 seconds immediately prior to the viscosity measurement to provide a uniform shear history.

These adhesive formulations were used to prepare 3-ply poplar plywood panels. The adhesives were applied at a level of 20-22g per square foot to the poplar plies. A closed assembly time of 10 minutes was used with a 5 minute cold press at 100 psi. The panels were pressed at 250°F for 4 minutes at 150 psi. The panels were kept in a 74°F/50% RH room for 48 hours to condition prior to testing. The panels were tested for 3-cycle soak performance using the ANSI/HPVA HP-1-2004-4.6 procedure. The 3-cycle soak testing was performed using 4 test pieces per condition. Shear adhesive bond strength was measured using ASTM D-906 procedure. Dry shear values are the average of 4 test samples and wet shear values are the average of 6 samples. Properties of the formulations and the panels made with them are shown in Table 10.

**Table 10. Properties of Examples 37-44 and of 3-Ply Poplar Panels Made with These Adhesive Formulations**

| Adhesive Example Number | % PAE/Soy | % SMBS (Wet Basis) | Viscosity (cP)* | LV #/RPM | pH | % Pass 3rd Cycle | Shear Strength Testing | | | |
|---|---|---|---|---|---|---|---|---|---|---|
| | | | | | | | Dry Shear (psi) | % Dry WF | Wet Shear (psi) | % Wet WF |
| 37 (comparative) | 12.5 | 0.0% | >2,000,000 | 4/0.3 | 8.17 | 100 | 262 | 93 | 149 | 15 |
| 38 | 12.5 | 0.5% | 52,800 | 4/6 | 8.04 | 75 | 306 | 55 | 120 | 1 |
| 39 (comparative) | 16.7 | 0.0% | >2,000,000 | 4/0.3 | 7.93 | 100 | 309 | 90 | 154 | 14 |
| 40 | 16.7 | 0.5% | 56,000 | 4/6 | 8.07 | 100 | 267 | 61 | 139 | 7 |
| 41 (comparative) | 20 | 0.0% | >2,000,000 | 4/0.3 | 7.94 | 100 | 277 | 83 | 157 | 11 |
| 42 | 20 | 0.5% | 46,000 | 4/6 | 8.01 | 100 | 280 | 96 | 136 | 2 |
| 43 (comparative) | 25 | 0.0% | 1,310,000 | 410.3 | 8.04 | 100 | 344 | 79 | 182 | 14 |
| 44 | 25 | 0.5% | 37,000 | 4/6 | 7.95 | 100 | 287 | 98 | 151 | 7 |

| | | | | | | | | | | |
|---|---|---|---|---|---|---|---|---|---|---|
| WF means Wood Failure | | | | | | | | | | |

These results indicate that the use of SMBS in the adhesive formulation provides a significant decrease in viscosity. The wet shear strength values show that the presence of SMBS in the adhesive formulation decreased the wet shear value by 10 to 20%. However, the wet strength was sufficient to pass the 3-cycle soak test in all cases except for at the lowest PAE/soy level of 12.5%. The results also show that the wet shear strength can be increased by increasing the PAE/soy level.

### Examples 45-48 SMBS-Modified Formulations at Varied pH Values

A series of SMBS-modified soy/PAE polymer adhesive formulations were prepared having a range of pH values. The quantities of additives used in these formulations are shown in Table 11. These formulations were prepared by adding water, Advantage 357 Defoamer (Hercules Incorporated, Wilmington DE), CA1920A PAE polymer having a solids content of 20% (Hercules Incorporated, Wilmington DE) and sodium metabisulfite (>99%, ReagentPlus, Aldrich Chemical, Milwaukee WI) to a 600 mL stainless steel beaker and mixing well for 2 minutes. Prolia 200/70 soy flour (Cargill, Minneapolis MN) was added to the contents of the beaker and the mixture was stirred at 1,000 rpm for 8 minutes. At this point the pH was adjusted using the appropriate acid or base or else no pH adjustment was performed, as in the case of Example 47.

**Table 11. Adhesive Formulations with Varied pH Values**

| Example : | g Water | G CA1920A | g SMBS | g A357 | g Prolia 200/70 | pH Adjust | pH | Viscosity (cP) (1) |
|---|---|---|---|---|---|---|---|---|
| 45 | 115,60 | 80.00 | 0.1 0 | 0.32 | 84.21 | 25% Sulfuric | 3.98 | 31,400 |
| 46 | 115.60 | 80.00 | 0.10 | 0.32 | 84.21 | 25% Sulfuric | 4.55 | 27.000 |
| 47 | 99.50 | 80.00 | 0.40 | 0.32 | 84.21 | None | 5,43 | 53,500 |
| 48 | 97.56 | 80.00 | 0.40 | 0.32 | 84.21 | 25% NaOH | 6.96 | 60,400 |

| | | | | | | | | |
|---|---|---|---|---|---|---|---|---|
| 1. All viscosities were measured with an RV viscometer using a #6 spindle at 10 rpm. | | | | | | | | |

The viscosity of the adhesive formulations was measured using an RV viscometer using a #6 spindle at 10 rpm. The samples were stirred vigorously by hand for 30 seconds immediately prior to the viscosity measurement to provide a uniform shear history. Three-ply oak panels were prepared using these examples. The adhesives were applied at a level of 20-22g per square foot to the poplar plies, These panels were prepared under conditions of no closed assembly time minutes and no cold press. The panels were pressed at 250°F for 3 minutes at 150 psi. The panels were kept in a 74°F/50% RH room for 48 hours to condition prior to testing. The panels were tested for 3-cycle soak performance using the ANSI/HPVA HP-1-2004-4.6 procedure. The 3-cycle soak testing was performed using 4 test pieces per condition. Shear adhesive bond strength was measured using ASTM D-906 procedure. Dry shear values are the average of 4 test samples and wet shear values are the average of 6 samples. Properties of the formulations and the panels made with them are shown in Table 12.

**Table 12. Adhesive Properties of 3-Ply Oak Panels Made With Adhesive Examples 45-48**

| Adhesive | | Panel Testing | | | | | | |
|---|---|---|---|---|---|---|---|---|
| Example # Used | pH | 3-Cycle % Pass | Shear Strength Testing | | | | | |
| | | | Dry Shear (psi) | SD | % Dry WF | Wet Shear (psi) | SD | % Wet WF |
| 45 | 3.98 | 0% | 276 | 42 | 26 | 18 | 20 | 1 |
| 46 | 4.55 | 0% | 324 | 42 | 29 | 104 | 48 | 3 |
| 47 | 5.43 | 100% | 275 | 77 | 79 | 115 | 22 | 2 |
| 48 | 6.96 | 100% | 274 | 45 | 75 | 115 | 24 | 9 |

| | | | | | | | | |
|---|---|---|---|---|---|---|---|---|
| SD means standard deviation WF meansWood failure | | | | | | | | |

The panel fabrication conditions (no closed assembly time, no cold press and short press time) were chosen for this study in order to provide a good differentiation between the test formulations. These results show that the pH can have a very significant effect on adhesive properties. The two adhesive formulations with pH values below 5 had 0% pass scores for the 3-cycle soak test. The pH 3.98 sample (Example 45) had an extremely low wet shear score. The adhesive formulations with pH values above 5 (Example 47, pH = 5.43, no pH adjustment and Example 48, pH 6.96) a 100% passing score was seen in the 3-cycle soak test and the wt adhesion values were 115 psi. The performance differences above and below pH 5.0 are even more notable when one considers that samples 47 and 48 (pH > 5) had a four times higher level of SMBS than examples 45 and 46 (pH < 5). Increasing the ratio of PAE polymer to soy would improve panel properties as would the inclusion of closed assembly and cold-pressing steps.

### Example 49-56: Soy Dispersions Prepared With Viscosity Modifiers

A series of soy dispersions shown in Table II were made using either SBS or cysteine. These soy dispersions can achieve higher total solids at nearly equivalent viscosities than the dispersion made without SBS. These formulations were made by adding water and the additive, either sodium bisulfite (obtained from Aldrich Chemical Company, Milwaukee WI, >99% purity) or cysteine (obtained from Aldrich Chemical Company, Milwaukee WI, 97% purity), in a 500 ml 4 neck round bottom flask. The additive percentages are based on soy flour weight. The solution was mixed using an overhead stirrer and soy flour (Prolia® 200/20 defaited soy flour, available from Cargill, Inc., Minneapolis MN) was added over the course of 2 minutes. The mixture was then heated to 85 °C and held there for 30 minutes. Urea (available from Aldrich Chemical Company, Milwaukee, WI, 98% purity) was then added and the dispersion cooled to room temperature.

The viscosity was measured with a Brookfield LV DV-E viscometer using a #4 spindle at 20 rpm. The samples were stirred vigorously by hand for 30 seconds immediately prior to the viscosity measurement to provide a uniform shear history for the samples. Properties of these formulations are shown in Table 13.

**Table 13. Viscosity of Soy/Urea Dispersions**

| Example | Total Solids | g Water | g Soy Flour | g Urea | Soy Flour Type | % Cysteine | % SBS | Viscosity (cP) |
|---|---|---|---|---|---|---|---|---|
| 49 (Comparative) | 45% | 188.91 | 56.0 | 103.04 | Prolia 200/20 | 0% | 0% | 8,800 |
| 50 | 55% | 126.88 | 56.0 | 103.04 | Prolia 200/20 | 0% | 0.50% | 4,680 |
| 51 | 55% | 126.88 | 56.0 | 103.04 | Prolia 200/20 | 0% | 1% | 3,690 |
| 52 | 60% | 103.39 | 56.0 | 103.04 | Prolia 200/20 | 0% | 150% | 4,260 |
| 53 | 55% | 126.88 | 56.0 | 103.04 | Prolia 200/20 | 0.50% | 0% | 5,000 |
| 54 | 55% | 126.88 | 56.0 | 103.04 | Prolia 200/20 | 1% | 0% | 4,350 |
| 55 | 60% | 103.39 | 56.0 | 103.04 | Prolia 200/20 | 0.50% | 0% | 10,450 |
| 56 | 60% | 103.39 | 56.0 | 103.04 | Prolia 200/20 | 1% | 0% | 6,380 |

The results show that the use of either SBS or cysteine allow for the reduction of viscosity so substantial that the solids of the dispersion can be raised from 45% up to 60% TS and still retain equivalent viscosity. Alternatively the solids can be raised to 55%, and achieve a lower viscosity than 45% without the additive. As shown in previous examples higher additive loadings give greater reductions in viscosity at constant solids levels.

### Examples 57-62; Use of Soy Dispersions to Make Particleboard

A series of soy/urea dispersions were prepared in a similar manner as those of examples 49 and 50. Soy to urea ratios of 1:2, 1:3 and 1:4 were utilized and one control sample and one SMBS-modified sample were prepared for each soy:urea ratio. These dispersions were used to prepare the particleboard (PB) formulations outlined in Table 14. CA1300 PAE polymer was used as the curing agent. The viscosity values of the bisulfite-modified formulations were only slightly higher than the comparative examples despite having solids contents of 5 to 7 percentage points greater. Only face furnish was used to prepare the PB panels. The PB samples were prepared using a press cycle of 5 minutes at a temperature of 170 °C.

**Table 14. Particleboard Made with Soy Dispersions**

| Example Number | Soy/Urea | Bisulfite | Adhesive Solids | Spray G | Adhesive Load % | % PAE | Mat Moisture (%) | Adhesive pH | Adhesive Viscosity (cP) | MOR @ 44 PCF (psi) |
|---|---|---|---|---|---|---|---|---|---|---|
| 57 | 1:2 | None | 41.5 | 148 | 10.8 | 1.8 | 15 | 6.6 | 2,650 | 1.549 |
| 58 | 1:2 | 0.5% | 48.3 | 129 | 10.8 | 1.8 | 11.7 | 5.9 | 3,780 | 1,650 |
| 59 | 1:3 | None | 46.5 | 134 | 10.8 | 1.8 | 12.5 | 6.7 | 1,410 | 1,768 |
| 60 | 1:3 | 0.5% | 52.6 | 119 | 10.8 | 1.8 | 10.1 | 5.9 | 2,020 | 1,860 |
| 61 | 1:4 | None | 50.0 | 125 | 10.8 | 1.8 | 11 | 6.4 | 1,044 | 1,543 |
| 62 | 1:4 | 0.5% | 55.6 | 113 | 10.8 | 1.8 | 9.1 | 5.8 | 1,580 | 1,599 |

The particleboard panels were tested for modulus of rupture (MOR) using several samples taken from the test panel. The MOR value was normalized to a density of 44 pounds per cubic foot (PCF). Results are shown in Table 14. There is no significant difference in the MOR values for the comparative examples and the bisulfite-modified formulations.

### Examples 63 & 64: Stability of Azetidinium Functionality in the Presence of Bisulfite

To 35 g of CA 1000 PAE polymer with solids content of 20% (Hercules Incorporated, Wilmington DE), 0.45 g of sodium metabisulfite (EMD Chemicals, Gibbstown, NJ) was added. The pH of the samples were adjusted to 7.7 (Example 63) and 6.0 (Example 64) using 25% NaOH. The samples were then diluted to 5% wet basis in D₂O and analyzed by NMR. The same NMR prepared samples was rerun, every hour for 3 hours. The results are shown in Table 15 and show that at a pH of 7.7 the azetidinium concentration quickly degrades by 14% whereas the sample at a pH of 6 only lost only 3% over the same time frame.

### Examples 65 & 66 Stability of Azetidinium Functionality in the Presence of Bisulfite

To a 3.125 g solution of Hercules CA1920A PAE polymer having a solids content of 20% (Hercules Incorporated, Wilmington DE), and 6.875 g of water was added 0.037 g of sodium metabisulfite (EMD Chemicals, Gibbstown, NJ). The pH was adjusted to 7 for Example 65 and to 5 for Example 66 using 25% NaOH. The samples were then diluted to 5% wet basis in D₂O and analyzed by NMR. The same NMR prepared samples was rerun every hour for 3 hours. The results are shown in Table 15 and again the results show that at higher pH, in this case pH 7, the azetidinium is unstable when sodium bisulfite is present in the solution. The pH 7 sample lost 8% more azetidinium than the pH 5 sample by the time the sample was analyzed, By the end of the 3 hours the pH 7 sample has lost 12-13% of its azetidinium as compared to the pH 5 sample with appeared unaffected by the SBS.

The following procedure was used for all NMR measurement in the examples:

### Sample preparation:

(1) Weigh ∼50mg of the as-received PAE resin into a 5cc vial.
(2) Add ∼1cc D₂O (#2 solution) into the same vial.
(3) Mix contents of the vial using a vortex mixer.
(4) Transfer the contents of the vial into a 5mm NMR tube using a glass pipette.

The ¹H NMR spectra are acquired using BRUKER Avance spectrometers equipped with an inverse 5mm probe. A ¹H NMR operating frequency of 400 MHz (Avance 400) or 500 MHz (Avance 500) is sufficient for data collection. Electronic integration of the appropriate signals provides molar concentrations of the following alkylation components; polymeric aminochlorohydrins (ACH), and azetidinium ions (AZE). In order to calculate the concentrations of each of these species, the integral values must be placed on a one (1) proton basis. For example, the spectral region between 1.72-1.25ppm represents four (4) protons from the adipate portion of the diethylenetriamine-adipate backbone, hence the integral value is divided by 4, This value is used as the polymer common denominator (PCD) for calculation of the alkylation species. The chemical shifts of these species are provided below (using an adipate field reference of 1.5 ppm). The corresponding integral value of each alkylation product is used in the numerator for calculation, refer to examples below:
- AZE signal at 4.85-4.52 ppm represents 3 protons, thus, a division factor of 3 is required; integral of AZE ÷ 3 ÷ PCD = mole fraction AZE
- ACH signal at 68-69 ppm represents 2 AZE protons and 1 ACH proton; integral of ACH - (AZE signal ÷ 3 x 2) ÷ PCD = mole fraction ACH

The following spectral parameters are standard experimental conditions for ¹H. NMR analysis PAE-Epichlorohydrin resins on the Bruker Avance 400:

| | |
|---|---|
| Temperature | 55°C |
| Resonance Frequency | 400 MHz |
| # Data Points Acquired | 32K |
| Acquisition Time | 2 seconds |
| Sweep Width | 8278 Hz |
| Number of Scans | 32 |
| Relaxation Delay | 8 seconds |
| Pulse Tip Angle | 90° |
| Pulse Program* | zgpr (presaturation) |
| Processed Spectral Size | 32K |
| Apodization Function | Exponential |
| Line Broadening | 0.3 Hz |

Water suppression pulse power level is 80 - 85dB - 60 Watt ¹H transmitter Excess power will attenuate adjacent signals - USE "SOFT" PULSE

**Table 15. Effect of Sodium Bisulfite on Azetidinium Stability.**

| | | | % AZE by NMR | | | |
|---|---|---|---|---|---|---|
| Example number | pH | Base resin | Initial | 1 h | 2 h | 3 h |
| 63 | 7.7 | 47.7 | 38.1 | 34.8 | 33.1 | 33.2 |
| 64 | 6 | 47.7 | 47 | 45.7 | 45.4 | 44.9 |
| 65 | 7 | | 52.6 | 49.8 | 47.9 | 484 |
| 66 | 5 | | 60.5 | 60.9 | 59.9 | 604 |

## Claims

1. An adhesive composition comprising
a) a protein component,
b) an azetidinium functionalized polymer, and
c) one or more viscosity-modifying components selected from the group consisting of ethanedithiol, 1,3-propanedithiol, 1,4-butanedithiol, 2,3-butanedithiol, 1,5-pentane-dithiol, 1,5-hexanedithiol, dithiothreitol, dithioerythritol and 1-mercaptoethylether;
wherein the pH of the composition is between 5 and 7.5;
wherein the viscosity of the composition is less than 150,000 mPa.s (cP) and the solids content is greater than 25%.

2. The composition of claim 1 where the azetidinium functionalized polymer is an amine-epichlorohydrin polymer.

3. The composition of claim 1 where the azetidinium functionalized polymer is a polyamidoamine-epichlorohydrin polymer (PAE polymer).

4. The composition of claim 1 where the protein component is a soy protein.

5. The composition of claim 4 where the azetidinium functionalized polymer is a PAE polymer.

6. The composition of claim 5 wherein the viscosity-modifying component is sodium bisulfite.

7. The composition of claim 1 wherein the viscosity-modifying component is sodium bisulfite.

8. The composition of claim 1 wherein the amount of viscosity-modifying additive is from 1 part modifier to 100,000 parts protein to 1 part modifier to 10 parts protein.

9. The composition of claim 1 wherein the pH of the composition is between 5 and 7.

10. The composition of claim 1 wherein the solids content of die composition is greater than 30%.

## Patentansprüche

1. Klebstoffzusammensetzung, umfassend
a) eine Proteinkomponente,
b) ein azetidiniumfunktionalisiertes Polymer, und
c) eine oder mehrere viskositätsmodifizierende Komponenten, ausgewählt aus der Gruppe bestehend aus Ethandithiol, 1,3-Propandithiol, 1,4-Butandithiol, 2,3-Butandithiol, 1,5-Pentandithiol, 1,5-Hexandithiol, Dithiothreitol, Dithioerythritol und 1-Mercaptoethylether;
wobei der pH der Zusammensetzung zwischen 5 und 7,5 beträgt;
wobei die Viskosität der Zusammensetzung weniger als 150.000 mPa.s (cP) beträgt und der Feststoffgehalt größer als 25 % ist.

2. Zusammensetzung nach Anspruch 1, wobei das azetidiniumfunktionalisierte Polymer ein Amin-Epichlorhydrin-Polymer ist.

3. Zusammensetzung nach Anspruch 1, wobei das azetidiniumfunktionalisierte Polymer ein Polyamidoamin-Epichlorhydrin-Polymer (PAE-Polymer) ist.

4. Zusammensetzung nach Anspruch 1, wobei die Proteinkomponente ein Sojaprotein ist.

5. Zusammensetzung nach Anspruch 4, wobei das azetidiniumfunktionalisierte Polymer ein PAE-Polymer ist.

6. Zusammensetzung nach Anspruch 5, wobei die viskositätsmodifizierende Komponente Natriumbisulfit ist.

7. Zusammensetzung nach Anspruch 1, wobei die viskositätsmodifizierende Komponente Natriumbisulfit ist.

8. Zusammensetzung nach Anspruch 1, wobei die Menge des viskositätsmodifizierenden Additivs von 1 Teil Modifikator zu 100.000 Teile Protein bis 1 Teil Modifikator zu 10 Teile Protein beträgt.

9. Zusammensetzung nach Anspruch 1, wobei der pH der Zusammensetzung zwischen 5 und 7 beträgt.

10. Zusammensetzung nach Anspruch 1, wobei der Feststoffgehalt der Zusammensetzung größer als 30 % ist.

## Revendications

1. Composition d'adhésif comprenant
a) un composant protéique,
b) un polymère à fonction azétidinium, et
c) au moins un composant modifiant la viscosité choisi dans le groupe constitué de l'éthanedithiol, du 1,3-propanedithiol, du 1,4-butanedithiol, du 2,3-butanedithiol, du 1,5-pentanedithiol, duu 1,5-hexanedithiol, du dithiothréitol, du dithioérythritol et du 1-mercaptoéthyléther ;
dans laquelle le pH de la composition est compris entre 5 et 7,5 ;
dans laquelle la viscosité de la composition est inférieure à 150 000 mPa.s (cP) et la teneur en matières solides est supérieure à 25 %.

2. Composition selon la revendication 1, dans laquelle le polymère à fonction azétidinium est un polymère d'amine-épichlorohydrine.

3. Composition selon la revendication 1, dans laquelle le polymère à fonction azétidinium est un polymère de polyamidoamine-épichlorohydrine (polymère PAE).

4. Composition selon la revendication 1, dans laquelle le composant protéique est une protéine de soja.

5. Composition selon la revendication 4, dans laquelle le polymère à fonction azétidinium est un polymère PAE.

6. Composition selon la revendication 5, dans laquelle le composant modifiant la viscosité est le bisulfite de sodium.

7. Composition selon la revendication 1, dans laquelle le composant modifiant la viscosité est le bisulfite de sodium.

8. Composition selon la revendication 1, dans laquelle la quantité d'additifs modifiant la viscosité est comprise entre 1 partie de modificateur pour 100 000 parties de protéine et 1 partie de modificateur pour 10 parties de protéine.

9. Composition selon la revendication 1, dans laquelle le pH de la composition est compris entre 5 et 7.

10. Composition selon la revendication 1, dans laquelle la teneur en matières solides de la composition de colorant est supérieure à 30 %.
